# EUROPÄISCHE PATENTANMELDUNG

(11) **EP 1 279 715 A1**
(43) Veröffentlichungstag der Anmeldung: **29.01.2003**
(21) Anmeldenummer: 01118144.3
(22) Anmeldetag: 26.07.2001
(51) Int. Cl.: C09K 3/32, C02F 1/68

(54) **Verfahren zum Binden von unpolaren Substanzen**

(71) Anmelder: Amandus Kahl GmbH & Co., 21465 Reinbek (DE)
(72) Erfinder: Sitzmann, Werner, Dr., 21075 Hamburg (DE)
(74) Vertreter: Glawe, Delfs, Moll & Partner

(57) **Zusammenfassung**

Das Verfahren zum Binden von im wesentlichen unpolaren chemischen Substanzen, insbesondere Öl, sowie zum Entfernen der gebundenen Substanzen von festen oder flüssigen Oberflächen mit zerkleinertem Altreifenmaterial zeichnet sich dadurch aus, daß in einem Kollersystem, also einem Kollergang oder einer Kollerpresse, vermahlenes Altreifenmaterial verwendet wird.

## Beschreibung

Die Erfindung betrifft ein Verfahren zum Binden von im wesentlichen unpolaren chemischen Substanzen, insbesondere Öl, sowie zum Entfernen der gebundenen Substanzen von festen oder flüssigen Oberflächen, insbesondere von Wasseroberflächen oder aus Flüssigkeiten, mit zerkleinertem Altreifenmaterial, das auf die Oberfläche, insbesondere auf die Wasseroberfläche aufgebracht bzw. mit dem Wasser vermischt wird, die Substanz bindet und anschließend mechanisch von der festen oder flüssigen Oberfläche entfernt wird.

Bekannte Verfahren dieser Art (CH 688 895 A5; DE 40 07 695 C2; DE-OS 2 338 235) erlauben einerseits die Wiederverwendung von Altreifenmaterial und ermöglichen andererseits eine recht gute Reinigung der Wasseroberfläche bzw. des Wassers von darauf befindlichen oder darin emulgierten unpolaren chemischen Substanzen, insbesondere Ölen.

Die Zerkleinerung der Altreifen bei den vorbekannten Verfahren ist sehr energieaufwendig. Das relativ weiche Altreifenmaterial läßt sich nicht so leicht zerkleinern. So kann z. B. Vorkühlen des Materials mit flüssigem Stickstoff zur Erhöhung der Produkthärte notwendig sein, wenn nachfolgend die Zerkleinerung in einer Schneidmühle erfolgen soll.

Die Aufgabe der Erfindung besteht in der Schaffung eines eingangs genannten Verfahrens, das einen geringeren Energieaufwand erfordert und die chemischen Substanzen besser binden kann als vorbekannte Verfahren.

Die erfindungsgemäße Lösung besteht darin, daß in einem Kollersystem, also einem Kollergang oder einer Kollerpresse, vermahlenes Altreifenmaterial verwendet wird.

Bei einem solchen Kollersystem rollen Kollerrollen auf der mit Bohrungen versehenen flachen oder ringförmigen Matrize ab und drücken das darauf aufgebrachte vorzerkleinerte Altreifenmaterial durch die Bohrungen der Matrize, wodurch das Altreifenmaterial weiter zerkleinert wird. Es entstehen bei dieser Vermahlung mit der Kollerpresse Granulate, die sich in ihrer Mikrostruktur deutlich von denjenigen Produkten unterscheiden, die mit den vorbekannten Verfahren hergestellt werden. Aufgrund des Zerkleinerungsprinzips der Kollerpressen - zwei oder mehr Koller laufen auf einer Laufbahn über eine perforierte Matrize, und zermahlen dabei das zwischen Koller und Matrize befindliche Produkt - wirken auf das Produkt erhebliche Scherkräfte ein, wenn das Produkt durch die Bohrungen der Matrize gedrückt wird. Diese Scherkräfte führen dazu, daß die Gummi- und Gewebebestandteile nicht wie bei konventionellen Verfahren meist glatt geschnitten, sondern gleichzeitig zerfasert und zerkleinert werden. Gleichzeitig sorgen mikroskopisch kleine Gewebefasern und Metalldrähte, die trotz dem bei der Verarbeitung vorgesehenen Metallabscheidungsschritt nicht entfernt werden können, für einen Verbund der Gummibestandteile, und soweit sie nicht entfernt werden, der Gewebebestandteile.

Durch die Verarbeitung der aus Gewebe, Stahl und Gummi aufgebauten Altreifen können diese nicht nur erneut einer sinnvollen Verwendung zugeführt werden. Vielmehr ist für die Zerkleinerung des Altreifenmaterials auch weniger Energie notwendig. Schließlich bindet das erfindungsgemäß zerkleinerte Altreifenmaterial die chemischen Verbindungen, insbesondere Öle wesentlich besser als die Materialen des Standes der Technik. Man hat damit eine stark verbesserte Möglichkeit, die Oberflächen von durch Mineralöl verunreinigten Gewässern zu reinigen bzw. aus Emulsionen von Wasser mit solchen Ölen oder ähnlichen Stoffen diese Stoffe zu entfernen.

Wie erwähnt können als Kollerpressen sowohl Flachmatrizenpressen als auch Ringmatrizenpressen verwendet werden. Als besonders vorteilhaft hat sich dabei die Flachmatrizenpresse erwiesen. Im Gegensatz zur Ringmatrizenpresse rollen die Kollerrollen auf der Flachmatrizenpresse nicht ideal ab. Vielmehr findet im Innenbereich und Außenbereich der Flachmatrize eine Relativbewegung zwischen Oberfläche der Kollerrolle und Oberfläche der Matrize statt. Nur im Mittelbereich rollen die Kollerrollen bei ihrer Kreisbahn auf der Flachmatrize im wesentlichen schlupffrei ab. Durch diese Relativbewegungen werden die Scherkräfte weiter erhöht, weswegen die Verwendung einer Flachmatrizenpresse besonders vorteilhaft ist.

Insbesondere durch den Einsatz der Flachmatrizenpressen bei der Vermahlung der in Schreddern auf eine Stückgröße von etwa 50 x 50 mm vorzerkleinerten Altreifen entsteht, also im Hinblick auf die spätere erfindungsgemäße Verwendung derartiger Produkte zur Adsorbtion überwiegend unpolarer Stoffe ein erstaunlich vorteilhaftes Produkt. Durch das Zerfasern des Materials in der Flachmatrizenpresse wird ein Granulat mit außerordentlich hoher Kapillarwirkung und damit einer unerwartet hohen Adsorbtionfähigkeit erzeugt. Durch das "Hineinwalzen" der mikroskopisch kleinen Materialdrähte in die zerkleinerte Gummi- und Gewebematrix entsteht nach Aufnahme der zu adsorbierenden Stoffe zusätzlich zu den dadurch auftretenden Haftkräften ein mechanischer Zusammenhalt der Granulatbestandteile.

Die Schüttdichte des Granulats ist - sowohl mit als auch ohne Gewebeanteile - weit unter 1 kg pro Liter, so daß dieses Granulat hervorragend auch für die Anwendung im Flüssigsystemen mit Dichten um 1 kg pro Liter und höher geeignet ist, da es dann auf der Oberfläche schwimmt und leicht mechanisch entfernt werden kann.

Emulsionen, aus denen eine oder mehrere überwiegend unpolare Komponenten adsorbtiv von anderen, überwiegend polaren Komponenten abgetrennt werden sollen, können behandelt werden, indem das erfindungsgemäße hergestellte zerkleinerte Altreifenmaterial untergemischt wird und anschließend das Gemisch über die Zeit sich selbst überlassen wird. Das Granulat mit dem gebundenen Stoff wird sich nach entsprechender Phasentrennung aufgrund der Auftriebskräfte an der Flüssigkeitsoberfläche absetzen, von wo es mechanisch mit Sieben oder dergleichen entfernt werden kann.

Auch wenn Öl oder ähnliche Stoffe von der Oberfläche eines Gewässers entfernt werden sollen, kann es vorteilhaft sein, das zerkleinerte Altreifenmaterial nicht einfach auf die Oberfläche zu streuen, sondern unterzumischen, da es sich dann schneller und intensiver mit dem Öl verbindet.

Es stört keinesfalls, sondern kann anwendungsbezogen sogar die Wirkung verbessern, wenn das zerkleinerte Altreifenmaterial noch Textilreste und/oder minimale Metallreste aufweist. Es ist daher nur eine grobe Entfernung der Metallreste vor der Vermahlung in der Flachmatrizenpresse erforderlich.

Vorteilhafterweise hat das zerkleinerte Altreifenmaterial eine Schüttdichte von deutlich weniger als 1 kg pro Liter, da es dann auf dem Wasser schwimmt und dort besonders leicht entfernt werden kann.

Zweckmäßigerweise wird das zerkleinerte Altreifenmaterial mit einer Menge von ca. 10 bis 100 Gew.-% der zu entfernenden chemischen Substanz zugegeben. Besonders vorteilhaft ist es, wenn dieses Verhältnis 20 bis 70 Gew.-% oder aber noch besser 30 bis 60 Gew.-% beträgt. Besonders zweckmäßig ist es aber, wenn das zerkleinerte Altreifenmaterial in einer Menge 40 bis 50 Gew.-% der zu entfernenden chemischen Substanz zugegeben wird.

Nach dem Zufügen des zerkleinerten Altreifenmaterials läßt man dieses eine gewisse Zeit ruhen, damit die chemische Substanz adsorbiert werden kann. Insbesondere dann, wenn das zerkleinerte Altreifenmaterial eingemischt ist, kann in diesem Zeitraum auch das zerkleinerte Altreifenmaterial mit den daran gebundenen Substanzen aufschwimmen und dann von der Oberfläche mechanisch entfernt werden.

Das zerkleinerte Altreifenmaterial kann zur Rückgewinnung der chemischen Substanzen mechanisch ausgepreßt oder unter Anwendung von Lösungsmitteln einer Extraktion oder einer thermischen Nutzung, zum Beispiel einer Verbrennung unterzogen werden.

Das vorgeschredderte Altreifenmaterial kann nacheinander auf unterschiedlich konfigurierten Flachmatrizenpressen gemahlen werden, wobei in Kombination mit konventionellen Trenntechniken, wie Siebung oder Sichtung, Fraktionen mit unterschiedlichen mittleren Korngrößen und/oder unterschiedlichen Anteilen an Gewebe und/oder Metall erzeugt und aus dem Prozeß ausgeschleust werden können.

Beim Vermahlen in der Flachmatrizenpresse werden die Parameter so gewählt, daß das Material zwar vermahlen, eine Bildung von Pellets aber im wesentlichen verhindert wird. Dies wird dadurch erreicht, daß man ein Preßverhältnis von ungefähr 1:1 bis 1:3, vorzugsweise ungefähr 1:2 verwendet. Das Preßverhältnis ist dabei das Verhältnis des Durchmessers der Bohrungen der Matrize zur Länge der Matrizen. Je länger die Bohrungen der Matrize sind, um so mehr wird das Material in den Bohrungen zu Pellets verdichtet. Bei der Erzeugung von Pellets z.B. für Futtermittel arbeitet man mit einem höheren Preßverhältnis von etwa 1:5 oder 1:8.

Die Erfindung soll im folgenden anhand von Ausführungsbeispielen unter Bezugnahme auf die beigefügten Abbildungen beschrieben werden. Es zeigen:
- Fig. 1: den schematischen Aufbau einer Flachmatrizenpresse;
- Fig. 2-6: Fotografien von Versuchsergebnissen mit unterschiedlichen Anteilen an zerkleinertem Altreifen-material ca. 2 Stunden nach Zugabe desselben.

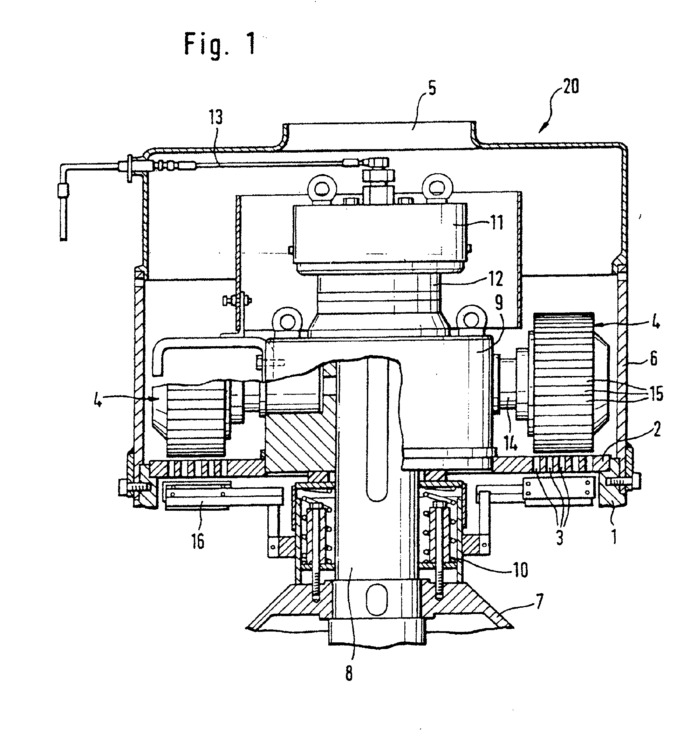

Zum besseren Verständnis der Erfindung soll zunächst unter Bezugnahme auf Fig. 1 der bekannte Aufbau einer Pelletpresse 20 beschrieben werden.

Auf einem Maschinengestell 1 ist eine Flachmatrize 2 befestigt, die mit Bohrungen 3 versehen ist, durch die das durch Kollerrollen 4 zusammengepreßte Material hindurchgedrückt wird. Das Ausgangsmaterial wird dabei durch die Öffnung 5 im Gehäuse 6 von ober her eingefüllt. Das Gehäuse 6 ist ebenfalls am Maschinengestell 1 befestigt.

Auf in der Figur nicht gezeigte Weise ist am Maschinengestell 1 ein Drehteller 7 drehbar befestigt, der mit einem entsprechenden nicht gezeigten Antrieb in Verbindung steht. Dieser Drehteller 7 mit einer damit verbundenen Königswelle 8 kann durch den Betrieb um eine in Figur 1 senkrechte Achse gedreht werden.

Auf der Königswelle 8 ist ein Kollerkopf 9 so befestigt, daß er relativ zur Königswelle 8 unverdrehbar ist (sich also nur mit derselben drehen kann), jedoch axial auf der Königswelle 8 verschiebbar und mit Hilfe von Federn 10, einer Hydraulikmutter 11 und Distanzringen 12 durch Hineinpresssen oder Ablassen von Hydraulikfluid über die Leitung 13 in die Hydraulikmutter 11 in seiner Höhe einstellbar ist. Die Kollerrollen sind durch Achsen 14 so am Kollerkopf 9 befestigt, daß sie sich um diese horizontalen Achsen frei drehen können und damit bei Drehung des Kollerkopfes 9 um seine vertikale Achse auf der Matrize beziehungsweise der Materialschicht abrollen. Sie sind noch mit Riffelungen beziehungsweise Materialaufnahmenuten 15 versehen, um den Pressvorgang zu erleichtern.

Das gepreßte Material tritt in Strangform durch die Löcher 3 der Matrize 2 und wird durch Abbrecheinrichtungen 16, die mit dem Kollerkopf rotieren, in Abschnitte unterteilt.

Da die Kollerrollen 4 zylindrisch sind, können sie nicht gleichmäßig auf der Flachmatrize abrollen; es findet vielmehr innen und außen eine Gleitbewegung zwischen Kollerrolle 4 und Flachmatrize 2 statt, da die Kollerrolle 4 innen einen kleineren und einen größeren Weg zurücklegen muß. Dies bewirkt Scherkräfte auf das Altreifenmaterial, die bei einer Ringmatrizenpresse nicht auftreten würden. Es wirken daher nicht nur die Scherkräfte beim Durchtreten des Materials durch die Bohrungen der Matrize.

Es wurden folgende Versuche unternommen.

Je 25 ml Mineralöl wurden als zu adsorbierender Stoff in drei Bechergläser, die mit etwa 1,5 l Wasser (zur Simulation von Meerwasser wurde in einem Teilversuch eine entsprechende Menge Salz hinzugegeben) gefüllt waren, gegeben. Nach kurzer Zeit befand sich eine geschlossene Ölfläche auf der Wasseroberfläche. Jeweils 6, 12,5 und 25 g einer Granulatmischung aus Gummi und Gewebe mit einem Korndurchmesser von 1 bis 5 mm wurden in diese Öl-/Wassermischung eingerührt. Bei kleineren Korndurchmessern als ungefähr 1 mm bildet sich auf der Wasseroberfläche ein Schlamm, der schwer zu entfernen ist. Bei Korndurchmessern, die wesentlich größer sind als 5 mm, ist pro aufgebrachter Menge von Altreifenmaterial die aktive Oberfläche sehr klein, so daß das Öl nicht mehr wirksam absorbiert werden kann.

Bereits nach Bruchteilen einer Minute wurden die jeweiligen Ölmengen von den Granulaten aufgenommen. Das Granulat-/Ölgemisch schwamm an der Oberfläche. Am besten hat sich bezüglich der Bildung stabiler, grober Agglomerate ein Mischungsverhältnis von 12,5 g Granulat pro 25 ml Öl herausgestellt. Diese Agglomerate verdichteten sich auf etwa ein Drittel der ursprünglich vorgelegten Ölfläche und konnten auf mechanischem Wege außerordentlich leicht entfernt werden. Die adsorbierte Ölmenge läßt sich mechanisch unter Druck(z. B. durch Filterpressen oder Schneckenpressen) oder extraktiv mit Lösungsmitteln fast vollständig zurückgewinnen.

Bei der Zugabe von 6 g/25 ml bildete sich ein Granulat-/Ölschlamm, der kaum Agglomerate bildete und mechanisch nicht einfach entfernt werden kann. Immerhin läßt sich ein solcher Schlamm von der Wasseroberfläche absaugen.

Bei der Zugabe von 25 g Granulat/25 ml Öl ergaben sich ebenfalls stabile Agglomerate, allerdings waren diese deutlich kleiner als bei einem Mischungsverhältnis von 12,5/25 ml und konnten daher nicht ganz so einfach mechanisch, deutlich besser aber als bei einem Verhältnis von 6 g/25 ml, entfernt werden.

In allen Fällen zeigte sich, daß innerhalb der ersten 30 Stunden keine oder nur vernachlässigbar geringe Anteile der Agglomerate auf den Grund der Bechergläser absanken. In allen Fällen war die Wasserfläche sowie die Glasoberfläche optisch ölfrei. Auch nach 180 Stunden war bei Versuchen mit einem Mischverhältnis von 6 und 12,5 g Granulat/25 ml Öl keinerlei Absinken von Produkt festzustellen. Das Absinkverhalten verschlechterte sich allerdings - dies jedoch auch erst nach 48 Stunden - bei einer Granulatzugabe im Überschuß. Das optimale Mischungsverhältnis hängt dabei sicherlich von den jeweils zu adsorbierenden Substanzen ab und muß in Vorversuchen geklärt werden.

In einem zweiten Versuch wurde reines Gummigranulat ohne Gewebeanteile in einer ansonsten gleichen Versuchsreihe eingesetzt. Die Ergebnisse waren ähnlich wie bei der oben beschriebenen Versuchsreihe, allerdings war die Agglomeratbildung bei dem Gemisch 12,5 g Granulat/25 ml Öl noch deutlicher ausgebildet.

Wie erwähnt, wird das Altreifenmaterial in einer oder mehreren Pelletpressen mit einem geringen Preßverhältnis von ungefähr 1:1 bis 1:3, vorzugsweise von ungefähr 1:2 vermahlen. Zum Beispiel kann das Altreifenmaterial nach Vorzerkleinerung in einer ersten Presse mit 1,25 m Matrizendurchmesser vermahlen werden, wobei die Bohrungen der Matrize einen Durchmesser von 20 mm und eine Länge von 40 mm haben. Nach anschließender Siebung kann dann eine weitere Vermahlung in einer folgenden Pelletpresse vorgenommen werden, bei der die Bohrungen einen Durchmesser von lediglich noch 8 bis 10 mm und einen Länge aufweisen, die wieder ungefähr doppelt so lang ist wie der Durchmesser der Bohrungen. Durch das geringe Preßverhältnis wird verhindert, daß das Altreifenmaterial zu Pellets verpreßt wird.

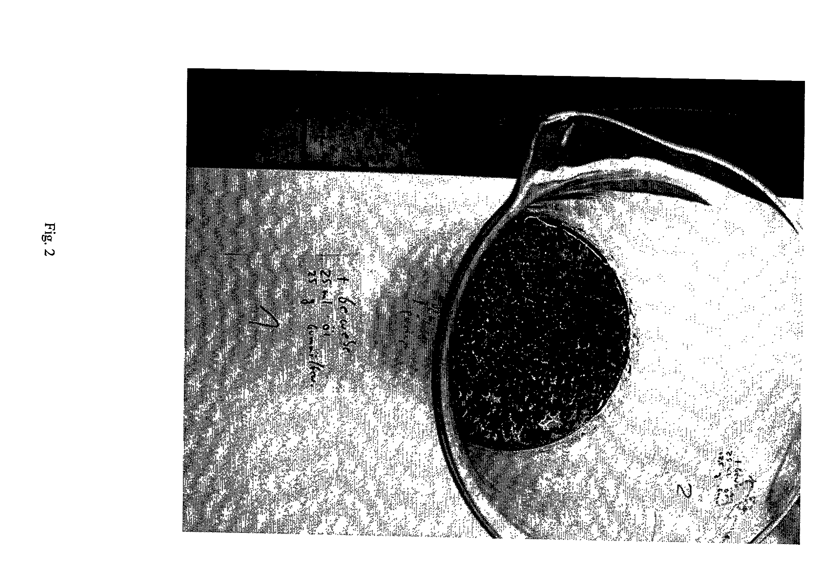

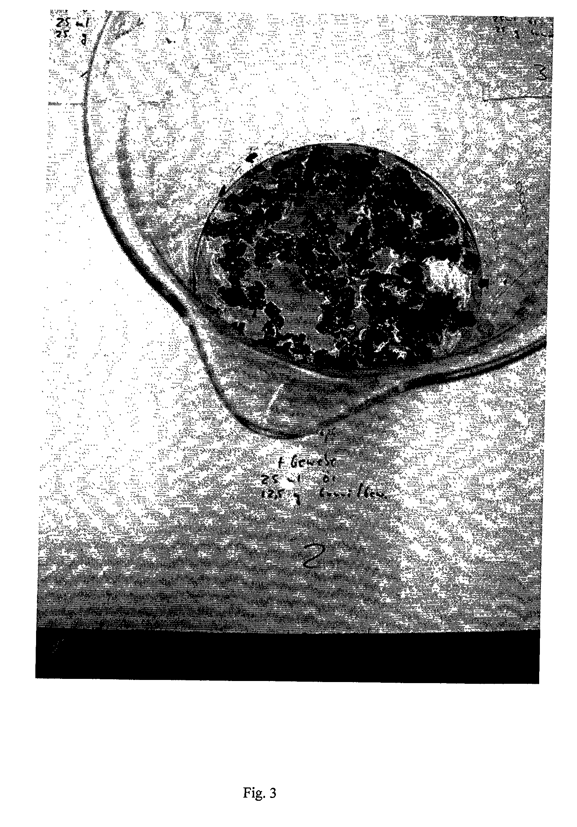

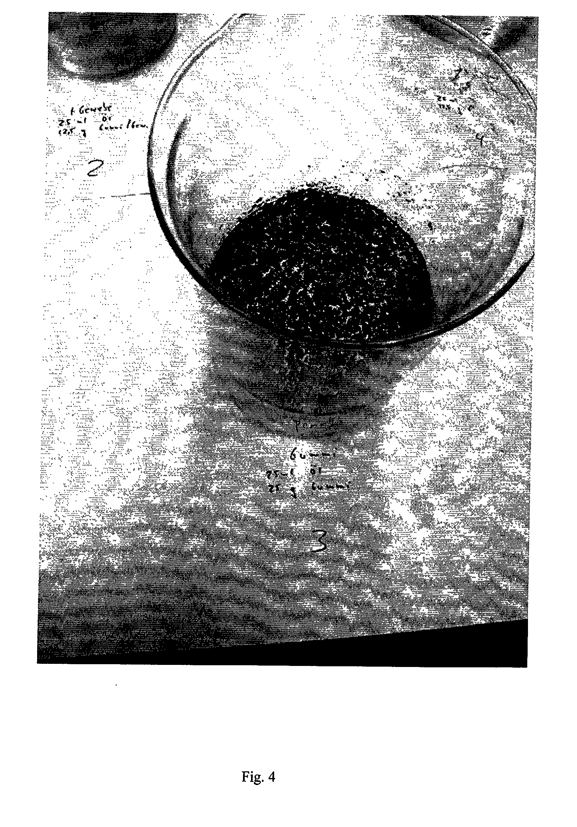

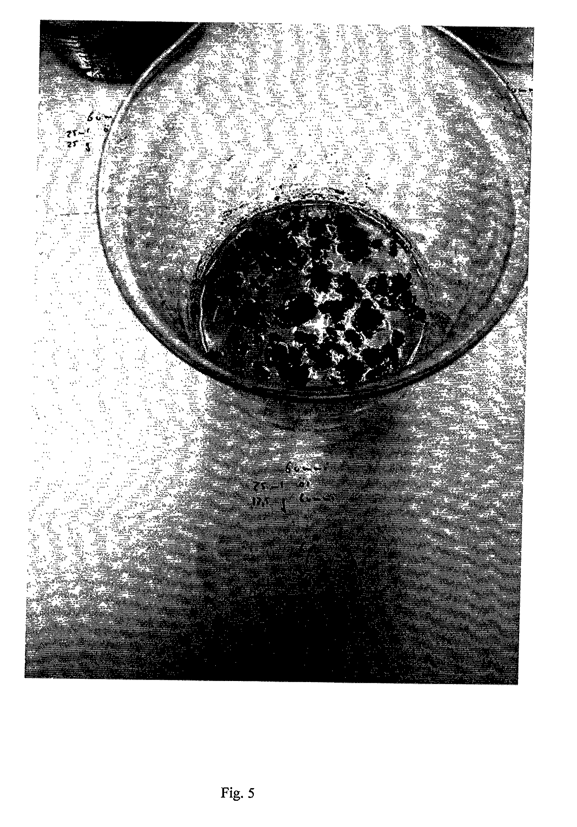

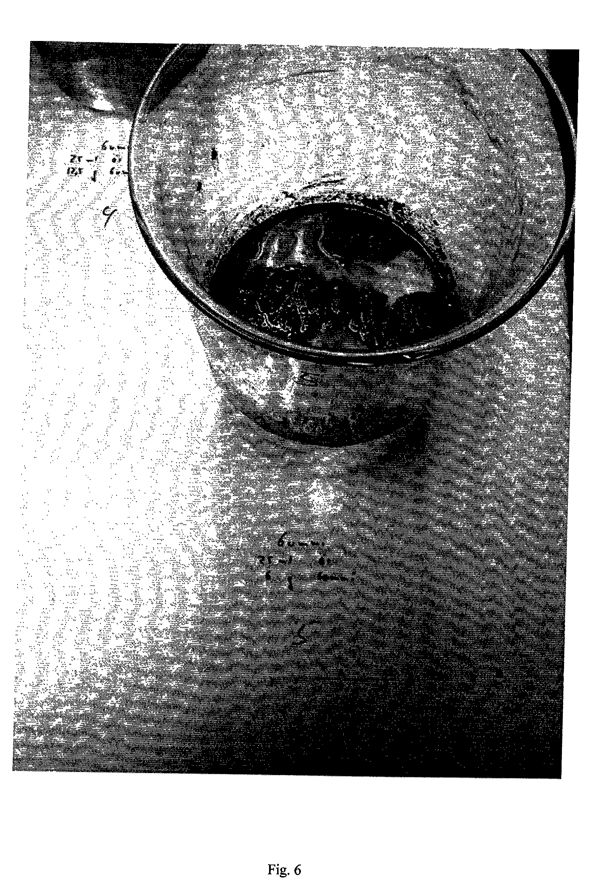

Die Ergebnisse sind in Figur 2 bis 6 gezeigt. Dabei wurde folgendes zerkleinerte Altreifenmaterial (Granulat) auf Wasser gestreut, auf das vorher 25 ml Öl aufgebracht worden war:

| **Fig.** | **Versuch** | **Altreifenmaterial** | **Menge (Granulat)** |
|---|---|---|---|
| 2 | 1 | Gummi/Gewebe | 25 g |
| 3 | 2 | Gummi/Gewebe | 12,5 g |
| 4 | 3 | Gummi | 25 g |
| 5 | 4 | Gummi | 12,5 g |
| 6 | 5 | Gummi | 6,3 g |

## Patentansprüche

1. Verfahren zum Binden von im wesentlichen unpolaren chemischen Substanzen, insbesondere Öl, sowie zum Entfernen der gebundenen Substanzen von festen oder flüssigen Oberflächen, insbesondere von Wasseroberflächen oder aus Flüssigkeiten, mit zerkleinertem Altreifenmaterial, das auf die Oberfläche, insbesondere auf die Wasseroberfläche aufgebracht bzw. mit dem Wasser vermischt wird, die Substanz bindet und anschließend mechanisch von der festen oder flüssigen Oberfläche entfernt wird, **dadurch gekennzeichnet, daß** in einem Kollersystem, also einem Kollergang oder einer Kollerpresse, vermahlenes Altreifenmaterial verwendet wird.

2. Verfahren nach Anspruch 1, **dadurch gekennzeichnet, daß** in einer Flachmatrizenpresse vermahlenes Altreifenmaterial verwendet wird.

3. Verfahren nach Anspruch 1 oder 2, **dadurch gekennzeichnet, daß** Textilreste enthaltendes zerkleinertes Altreifenmaterial verwendet wird.

4. Verfahren nach einem der Ansprüche 1 bis 3, **dadurch gekennzeichnet, daß** geringe Metallreste enthaltendes zerkleinertes Altreifenmaterial verwendet wird.

5. Verfahren nach einem der Ansprüche 1 bis 4, **dadurch gekennzeichnet, daß** zerkleinertes Altreifenmaterial mit einer Schüttdichte von deutlich weniger als 1 kg/Liter verwendet wird.

6. Verfahren nach einem der Ansprüche 1 bis 5, **dadurch gekennzeichnet, daß** das zerkleinerte Altreifenmaterial in einer Menge von ca. 10 bis 100 Gew.-% der zu entfernenden chemischen Substanzmenge zugegeben wird.

7. Verfahren nach einem der Ansprüche 1 bis 5, **dadurch gekennzeichnet, daß** das zerkleinerte Altreifenmaterial in einer Menge von ca. 20 bis 70 Gew.-% der zu entfernenden chemischen Substanzmenge zugegeben wird.

8. Verfahren nach einem der Ansprüche 1 bis 5, **dadurch gekennzeichnet, daß** das zerkleinerte Altreifenmaterial in einer Menge von ca. 30 bis 60 Gew.-% der zu entfernenden chemischen Substanzmenge zugegeben wird.

9. Verfahren nach einem der Ansprüche 1 bis 5, **dadurch gekennzeichnet, daß** das zerkleinerte Altreifenmaterial in einer Menge von ca. 40 bis 50 Gew.-% der zu entfernenden chemischen Substanzmenge zugegeben wird.

10. Verfahren nach einem der Ansprüche 1 bis 9, **dadurch gekennzeichnet, daß** nach dem Einmischen des zerkleinerten Altreifenmaterials die entstandene Mischung ruhig gelassen wird, so daß sich das zerkleinerte Altreifenmaterial mit daran gebundenen Substanzen an der Systemoberfläche absetzt.

11. Verfahren nach einem der Ansprüche 1 bis 10, **dadurch gekennzeichnet, daß** das zerkleinerte Altreifenmaterial zur wenigstens teilweisen Rückgewinnung der chemischen Substanz mechanisch ausgepreßt wird.

12. Verfahren nach einem der Ansprüche 1 bis 10, **dadurch gekennzeichnet, daß** das zerkleinerte Altreifenmaterial zur wenigstens teilweisen Rückgewinnung der chemischen Substanz einer Lösungsmittelextraktion unterzogen wird.

13. Verfahren nach einem der Ansprüche 1 bis 12, **dadurch gekennzeichnet, daß** gleichzeitig zerkleinertes Altreifenmaterial mit unterschiedlichen mittleren Korngrößen und/oder unterschiedlichen Anteilen an Gewebe und/oder Metall verwendet werden.

14. Verfahren nach einem der Ansprüche 1 bis 13, **dadurch gekennzeichnet, daß** das Altreifenmaterial in einer Pelletpresse mit einem Preßverhältnis von ungefähr 1:1 bis 1:3 vermahlen wird.

15. Verfahren nach einem der Ansprüche 1 bis 13, **dadurch gekennzeichnet, daß** das Altreifenmaterial in einer Pelletpresse mit einem Preßverhältnis von ungefähr 1:2 vermahlen wird.
